# EUROPÄISCHE PATENTANMELDUNG

(11) **EP 4 333 165 A2**
(43) Veröffentlichungstag der Anmeldung: **06.03.2024**
(21) Anmeldenummer: 23190399.8
(22) Anmeldetag: 08.08.2023
(51) Int. Cl.: H01M 50/107, H01M 50/148, H01M 50/152, H01M 50/474, H01M 50/477, H01M 50/483, H01M 50/528, H01M 50/533, H01M 50/536, H01M 50/538, H01M 50/559, H01M 50/578

(54) **ENERGIESPEICHERELEMENT, DECKELBAUGRUPPE UND HERSTELLUNGSVERFAHREN**

(30) Priorität: 01.09.2022 EP 22193543
(71) Anmelder: VARTA Microbattery GmbH, 73479 Ellwangen Jagst (DE)
(72) Erfinder: Drews, Verena, Giengen 89537 (DE); Frank, Waldemar, 73479 Ellwangen (DE); Geiger, Michael, 73479 Ellwangen (DE); Kieninger, Dominik, 73492 Rainau (DE)
(74) Vertreter: Ostertag & Partner Patentanwälte mbB

(57) **Zusammenfassung**

Eine Energiespeicherelement (100) umfasst einen Elektroden-Separator-Verbund (104) mit der Sequenz Anode (105) / Separator (156) / Kathode (108), der eine erste endständige Stirnseite (104a) und eine zweite endständige Stirnseite (104b) aufweist. Weiterhin umfasst sie ein Kontaktblechteil (112), das auf einem Längsrand (106a, 109a) eines Stromkollektors (106, 109) einer der Elektroden aufsitzt, eine der Stirnseiten (104a, 104b) abdeckt und mit diesem Längsrand verbunden ist. Der Elektroden-Separator-Verbund (104) ist im Innenraum eines luft- und flüssigkeitsdicht verschlossenen Gehäuses angeordnet, das einen metallischen Gehäusebecher (101) mit einer endständigen kreisförmigen Öffnung und einen Deckel (102) mit einem kreisförmigen Rand (102a), welcher die kreisförmige Öffnung verschließt, umfasst. Der bevorzugt als Deckelbaugruppe ausgebildete Deckel (102) umfasst hierbei eine Metallscheibe (113) mit einem kreisförmigen Rand, wobei die Metallscheibe (113) eine Innenseite aufweist, die den Innenraum begrenzt. Es wird vorgeschlagen, dass das Kontaktblechteil (112) einen Distanzausgleichsbereich (112d) umfasst, der in einem Verbindungsbereich (112e) durch mit der Innenseite der Metallscheibe (113) verbunden ist. Alternativ hierzu kann ein Distanzausgleichsblechteil (177) vorgesehen sein, dass auf das Kontaktblechteil (112) aufgeschweißt ist, wobei das Distanzausgleichsblechteil (177) einen Distanzausgleichsbereich (177a) umfasst, der in einem Verbindungsbereich (177b) mit der Innenseite der Metallscheibe (113) verbunden ist. Die Bildung der Verbindung zwischen dem Distanzausgleichsbereich (177a) und der Innenseite der Metallscheibe (113) kann nach dem Schließen des Gehäuses erfolgen.

## Beschreibung

### ANWENDUNGSGEBIET UND STAND DER TECHNIK

Die nachstehend beschriebene Erfindung betrifft ein Energiespeicherelement, eine Deckelbaugruppe und ein Herstellungsverfahren.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. In der Regel sind Stromkollektoren mit dünnen Schichten aus den jeweiligen Aktivmaterialien beschichtet. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-lonen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm). Zellen dieser Art umfassen stets einen Elektroden-Separator-Verbund in Form eines Wickels. Moderne Lithium-Ionen-Zellen dieses Formfaktors können eine Energiedichte von bis zu 270 Wh/kg erreichen.

Eine Herausforderung stellt das elektrische Kontaktieren der Elektroden eines Energiespeicherelements dar. Beispielsweise bei Rundzellen mit dem Formfaktor 21 x 70 müssen die Elektroden des Wickels elektrisch angebunden und mit den elektrischen Polen des jeweiligen Gehäuses verbunden werden.

Klassisch kommt hierbei das sogenannte "Tab-Design" zur Anwendung. Ein Ende eines streifenförmigen Metallblechs (das "Tab") wird mit einer Elektrode verschweißt, das andere Ende beispielsweise mit einem Funktionsteil eines CID (current interrupt device), das in einen mehrteiligen Deckel eines Metallgehäuses integriert ist. Ein Beispiel hierfür ist in der US 7432010 B2 beschrieben.

Das Tab-Design hat einige Schwächen. Ein Problem hierbei ist, dass das Tab verhältnismäßig lang sein muss, weil es nur vor dem Schließen des Gehäuses an die Innenseite des Deckels geschweißt werden kann. Und beim Verschließen des Gehäuses muss das Tab mindestens einmal gefaltet werden, was produktionstechnisch oft nicht einfach zu realisieren ist. Darüber hinaus nimmt das gefaltete Tab innerhalb eines Gehäuses Raum ein, der nicht mehr für elektrochemisches Aktivmaterial zur Verfügung steht, und das Tab selbst ist ein Engpass in Bezug auf den Stromfluss in und aus dem Gehäuse, aber auch in Bezug auf die Wärmeableitung. Wenn eine elektrochemische Zelle in Betrieb ist, wird in den Elektroden Wärme erzeugt, die abgeleitet werden muss. Dies ist schwierig, wenn nur ein Tab als thermische Brücke zur Verfügung steht.

In den letzten Jahren wurde verstärkt an Lithium-Ionen-Zellen gearbeitet, bei denen die Elektroden mittels eines sogenannten "Tabless-Designs" kontaktiert werden. Hierbei wird auf Tabs gänzlich verzichtet. Stattdessen werden Elektroden-Separator-Verbünd in Form eines Wickels gefertigt, bei denen die Elektroden metallische Stromkollektoren mit unbeschichteten Längsrändern aufweisen, welche an Stirnseiten des Wickels aus dem Wickel herausragen. Dort können metallische Kontaktblechteile auf die Längsränder aufgeschweißt werden, wie das beispielsweise in der WO 2017/215900 A1 beschrieben ist. Dadurch ist es möglich, den Stromkollektor und damit auch die dazugehörige Elektrode über seine / ihre gesamte Länge elektrisch zu kontaktieren. Dies senkt den Innenwiderstand innerhalb der Zellen sehr deutlich. Das Auftreten großer Ströme kann in der Folge sehr viel besser abgefangen und auch Wärme kann besser aus dem Wickel abgeführt werden.

Das "Tabless-Design" löst in seinen bekannten Varianten allerdings nicht alle bestehenden Probleme. Beispielsweise ist immer noch eine elektrische Verbindung zwischen dem Deckel und dem damit zu kontaktierenden Kontaktblechteil erforderlich. Ein hierzu geeigneter elektrischer Leiter muss ebenso lang sein wie das erwähnte Tab, da er vor dem Schließen des Gehäuses noch mit dem Deckel verschweißt werden muss. Folglich muss der Leiter wie das Tab beim Schließen des Gehäuses gefaltet werden und erzeugt innerhalb des Gehäuses ein Totvolumen.

### AUFGABE UND LÖSUNG

Der vorliegenden Erfindung lag die Aufgabe zugrunde, Energiespeicherelemente bereitzustellen, die sich durch eine hohe Energiedichte auszeichnen.

Diese Aufgabe wird durch das Energiespeicherelement mit den Merkmalen des Anspruchs 1 gelöst. Auch die Deckelbaugruppe gemäß Anspruch 8 ist Gegenstand der Erfindung. Ein zur Erfindung gehöriges Verfahren ist Gegenstand des Anspruchs 9. Bevorzugte Ausführungsformen der Erfindung finden sich in den abhängigen Ansprüchen 2 bis 7.

Ein erfindungsgemäßes Energiespeicherelement (100) zeichnet sich durch die folgenden Merkmale aus:
a. Das Energiespeicherelement umfasst einen Elektroden-Separator-Verbund mit der Sequenz Anode / Separator / Kathode.
b. Der Elektroden-Separator-Verbund liegt in Form eines zylindrischen Wickels mit einer ersten endständigen Stirnseite und einer zweiten endständigen Stirnseite und einem dazwischen liegenden Wickelmantel vor.
c. Die Anode des Elektroden-Separator-Verbunds umfasst einen Anodenstromkollektor, der einen ersten Längsrand und einen dazu parallelen zweiten Längsrand aufweist und einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
d. Die Kathode des Elektroden-Separator-Verbunds umfasst einen Kathodenstromkollektor, der einen ersten Längsrand und einen dazu parallelen zweiten Längsrand aufweist und einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist.
e. Die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt.
f. Das Energiespeicherelement umfasst ein Kontaktblechteil, das auf dem ersten Längsrand des Anodenstromkollektors aufsitzt und die erste endständige Stirnseite abdeckt oder auf dem ersten Längsrand des Kathodenstromkollektors aufsitzt und die zweite endständige Stirnseite abdeckt und mit diesem verbunden ist, insbesondere durch eine stoffschlüssige Verbindung, besonders bevorzugt durch Verschweißung, Verklebung oder durch eine Lötverbindung.
g. Das Energiespeicherelement umfasst ein luft- und flüssigkeitsdicht verschlossenes Gehäuse, das einen metallischen Gehäusebecher mit einer endständigen kreisförmigen Öffnung und einen Deckel mit einem kreisförmigen Rand, welcher die kreisförmige Öffnung verschließt, umfasst, und das einen Innenraum umschließt, in dem der Elektroden-Separator-Verbund angeordnet ist.
h. Der Deckel umfasst eine Metallscheibe mit einem kreisförmigen Rand, wobei die Metallscheibe eine Innenseite aufweist, die den Innenraum begrenzt.
   Besonders zeichnet sich das erfindungsgemäße Energiespeicherelement (100) dadurch aus, dass
i. entweder das Kontaktblechteil einen Distanzausgleichsbereich umfasst, der in einem Verbindungsbereich mit der Innenseite der Metallscheibe verbunden ist, oder ein Distanzausgleichsblechteil auf das Kontaktblechteil aufgeschweißt ist, wobei das Distanzausgleichsblechteil einen Distanzausgleichsbereich umfasst, der in einem Verbindungsbereich mit der Innenseite der Metallscheibe verbunden ist.

Die Verbindung zwischen dem Distanzausgleichsbereich des Kontaktblechteils oder des Distanzausgleichsblechteil auf der einen Seite und der Innenseite der Metallscheibe auf der anderen Seite ist bevorzugt durch eine stoffschlüssige Verbindung, insbesondere durch Verschweißung oder Verklebung oder eine Lötverbindung, realisiert.

In einigen Ausführungsformen können der Distanzausgleichsbereich und die Metallscheibe auch durch eine formschlüssige Verbindung verbunden sein, beispielsweise eine Nietverbindung.

Wie im Folgenden erläutert wird, entfällt mit dem erfindungsgemäßen Design das Erfordernis eines langen elektrischen Leiters zur elektrischen Verbindung des Deckels und des Kontaktblechteils. Die Funktion des Leiters wird nämlich entweder durch das Distanzausgleichsblechteil oder das Kontaktblechteil mit dem Distanzausgleichsbereich übernommen. Diese überbrücken den Abstand zwischen dem Deckel und dem Elektroden-Separator-Verbund innerhalb des Gehäuses. Zudem kann eine Schweißverbindung zum Deckel erst nach dem Schließen des Gehäuses gebildet werden, was große Vorteile hinsichtlich einer optimalen Ausnutzung des zur Verfügung stehenden Gehäusevolumens mit sich bringt.

Die Verbindung zwischen den Distanzausgleichbereichen und der Innenseite der Metallscheibe in den Verbindungsbereichen ist bevorzugt durch besagte Verschweißung realisiert. Die Metallscheibe und das Kontaktblechteil oder das Distanzausgleichsblechteil sind entsprechend in den Verbindungsbereichen bevorzugt miteinander verschmolzen.

Besagte Verklebung kann realisiert werden, indem die Distanzausgleichbereiche und die Innenseite der Metallscheibe durch einen Klebstoff mit elektrisch leitenden Eigenschaften verbunden werden. Solche Klebstoffe sind beispielsweise aus der Leiterplattentechnik bekannt.

Besagte Lötverbindung kann gebildet werden, indem ein Lot aufgeschmolzen wird und in Kontakt mit einem der Distanzausgleichbereiche und der Innenseite der Metallscheibe erstarrt.

Besagte Nietverbindung kann beispielsweise mit Hilfe eines Blindniets realisiert werden, der durch ein Loch im Distanzausgleichsbereich und in der Metallscheibe geschoben wird.

In bevorzugten Ausführungsformen zeichnet sich der Deckel durch mindestens eines der unmittelbar folgenden Merkmale a. bis e. aus:
a. Der Deckel ist eine Deckelbaugruppe, die neben der Metallscheibe eine Polkappe umfasst, die mit der Metallscheibe in elektrischem Kontakt steht.
b. Die Polkappe sitzt unmittelbar auf der Metallscheibe auf.
c. Die Polkappe und die Metallscheibe schließen einen Zwischenraum ein.
d. Die Metallscheibe umfasst einen Verbindungsbereich, in dem die Verbindung mit dem Verbindungsbereich des Distanzausgleichsbereichs des Kontaktblechteils oder des Distanzausgleichsblechteils realisiert ist.
e. Die Polkappe umfasst mindestens eine Durchbrechung, durch welche der Verbindungsbereich der Metallscheibe von außerhalb des Gehäuses zugänglich ist, insbesondere mittels eines Lasers.

Besonders bevorzugt sind die unmittelbar vorstehenden Merkmale a. bis e. in Kombination realisiert.

Bei Ausführungen des Deckels als Deckelbaugruppe gewährleistet die Durchbrechung in der Polkappe die Zugänglichkeit des Verbindungsbereichs von außen. So kann die Verschweißung mittels eines Lasers vorgenommen werden.

Soll an Stelle der Verschweißung besagte Verklebung oder Verlötung zum Einsatz kommen, ist eine entsprechend positionierte Durchbrechung nicht zwingend erforderlich.

In Ausführungsformen des erfindungsgemäßen Energiespeicherelements, bei denen das Kontaktblechteil die Funktion des Distanzausgleichs zwischen dem Deckel und dem Elektroden-Separator-Verbund übernimmt, zeichnet sich das erfindungsgemäße Energiespeicherelement bevorzugt durch mindestens eines der unmittelbar folgenden Merkmale a. und b. aus.
a. Das Kontaktblechteil umfasst einen Kontaktierungsbereich, insbesondere einen scheibenförmigen Kontaktierungsbereich, an den der Längsrand des Anodenstromkollektors oder der Längsrand des angebunden ist, insbesondere angeschweißt ist.
b. Der Kontaktierungsbereich umschließt den Distanzausgleichsbereich, der sich aus der Ebene des Kontaktierungsbereichs heraus bis hin zu der Metallscheibe erstreckt.

Besonders bevorzugt sind die unmittelbar vorstehenden Merkmale a. und b. in Kombination realisiert.

In Ausführungsformen des erfindungsgemäßen Energiespeicherelements, bei denen das Distanzausgleichsblechteil die Funktion des Distanzausgleichs zwischen dem Deckel und dem Elektroden-Separator-Verbund übernimmt, zeichnet sich das erfindungsgemäße Energiespeicherelement bevorzugt durch mindestens eines der unmittelbar folgenden Merkmale a. und b. aus.
a. Das Distanzausgleichsblechteil umfasst einen Kontaktierungsbereich, insbesondere einen ringscheibenförmigen Kontaktierungsbereich, der insbesondere durch besagte Verschwei-ßung mit dem Kontaktblechteil verbunden ist.
b. Der Kontaktierungsbereich umschließt den Distanzausgleichsbereich, der sich aus der Ebene des Kontaktierungsbereichs heraus bis hin zu der Metallscheibe erstreckt.

Besonders bevorzugt sind die unmittelbar vorstehenden Merkmale a. und b. in Kombination realisiert.

Neben der Ringscheibenform kann der Kontaktierungsbereich auch andere Ausgestaltungen aufweisen. Beispielsweise kann er ringförmig ausgebildet sein und dabei einen polygonalen Außenumfang aufweisen, also beispielsweise einen äußeren Rand mit sechs oder mit acht Ecken aufweisen.

An dieser Stelle soll nicht unerwähnt bleiben, dass grundsätzlich auch die Metallscheibe des Deckels die Aufgabe des Distanzausgleichs zwischen dem Deckel und dem Kontaktblechteil übernehmen kann. Hierzu ist es erforderlich, dass die Metallscheibe einen Distanzausgleichsbereich umfasst, der in einem Verbindungsbereich durch Verschweißung oder Verklebung mit dem Kontaktblechteil verbunden ist. Dieser Distanzausgleichsbereich erstreckt sich dann in axialer Richtung bevorzugt bis hin zu einem Kontaktblechteil, das im Wesentlichen plan ausgestaltet ist.

Bevorzugt sind in den Deckel des erfindungsgemäßen Energiespeicherelements mehrere Sicherheitsfunktionen integriert:
a. Die Metallscheibe des Deckels ist bevorzugt als PRV (pressure relief valve) ausgebildet und umfasst zu diesem Zweck eine langgestreckte Schwächungsnut.
b. Im Verbindungsbereich zeichnet sich die Metallscheibe durch eine geringere Materialstärke aus als in dem den Verbindungsbereich umgebenden Bereich.

Besonders bevorzugt sind die unmittelbar vorstehenden Merkmale a. und b. in Kombination realisiert.

Das unmittelbar vorstehende Merkmal b. ist relevant im Zusammenhang mit einer CID-Funktion des Deckels, was anhand der Zeichnungen zur Erfindung nachstehend noch erläutert wird.

Hinsichtlich der mechanischen Stabilität des erfindungsgemäßen Energiespeicherelements sowie auch der erwähnten Sicherungsfunktionen sind ferner die folgenden bevorzugten Merkmale von Bedeutung:
a. Das Gehäuse umfasst eine Dichtung aus einem Kunststoffmaterial, welche den Rand des Deckels umschließt und zwischen dem Deckel und dem Gehäusebecher angeordnet ist.
b. Das Energiespeicherelement umfasst einen Stützring aus einem Kunststoffmaterial, der zwischen der Metallscheibe und der dem Distanzausgleichsblechteil oder zwischen der Metallscheibe und dem Kontaktblechteil angeordnet, insbesondere eingeklemmt, ist.
c. Der Stützring liegt auf dem Kontaktierungsbereich des Kontaktblechteils oder dem Kontaktierungsbereich des Distanzausgleichsblechteils auf.
d. Der Stützring ist Teil der Dichtung.

Besonders bevorzugt sind die unmittelbar vorstehenden Merkmale a. bis c., in einigen besonders bevorzugten Ausführungsformen auch die Merkmale a. bis d., in Kombination realisiert.

In besonders bevorzugten Ausführungsformen zeichnet sich das Energiespeicherelement weiterhin durch die folgenden Merkmale a. und b. aus:
a. Der Gehäusebecher umfasst in axialer Abfolge einen Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit dem Rand des Deckels und der Innenseite des Gehäusebechers steht, und
b. der Gehäusebecher weist in dem Verschlussabschnitt einen die kreisförmige Öffnung definierenden Öffnungsrand auf, der radial nach innen über den von der Dichtung umschlossenen Rand des Deckels umgebogen ist und der den Deckel einschließlich der Dichtung in der kreisförmigen Öffnung des Gehäusebechers formschlüssig fixiert.

Der Elektroden-Separator-Verbund steht mit der Innenseite des Gehäusebechers bevorzugt in unmittelbarem Kontakt. Besonders bevorzugt liegt er unmittelbar an der Innenseite des Gehäusebechers an. In einigen Ausführungsformen kann es allerdings vorgesehen sein, die Innenseite, beispielsweise mittels einer Folie, elektrisch zu isolieren. In diesem Fall steht der Elektroden-Separator-Verbunds in Kontakt über die Folie mit der Innenwand in Kontakt.

Der Boden des Gehäusebechers ist bevorzugt kreisförmig ausgebildet. Der Gehäusebecher wird meist durch Tiefziehen gebildet. Es ist aber auch möglich, den Becher durch Einschweißen eines Bodens in ein rohrförmiges Halbteil zu bilden.

Bevorzugt ist das erfindungsgemäße Energiespeicherelement als zylindrische Rundzelle ausgebildet. Seine Höhe liegt bevorzugt im Bereich von 50 mm bis 150 mm. Sein Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

### Ausführungsform als Lithium-Ionen-Energiespeicherelement

In einer besonders bevorzugten Ausführungsform der Erfindung basiert das erfindungsgemäße Energiespeicherelement auf Lithium-lonen-Technologie.

Für die Elektroden des Energiespeicherelements können im Grunde sämtliche für sekundäre Lithium-lonen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al₀.₀₅)₀.₈₉O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithium-bis(oxalato)borat (LiBOB).

Die Nennkapazität eines als zylindrische Rundzelle ausgebildeten Energiespeicherelements auf Lithium-Ionen-Basis beträgt bevorzugt bis zu 15000 mAh. Mit dem Formfaktor von 21 x 70 hat die Rundzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Rundzelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Ausführungsform auf Natrium-Ionen-Basis

In weiteren Ausführungsformen kann es sich bei dem Energiespeicherelement auch um eine Natrium-lonen-Zelle, eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherelemente mit Natrium-Ionen-Zellchemie besonders bevorzugt.

Bevorzugt umfasst das Energiespeicherelement auf Basis von Natrium-Ionen einen Elektrolyten, der mindestens eines der folgenden Lösungsmittel und mindestens eines der folgenden Leitsalze umfasst:
Als Lösungsmittel kommen insbesondere organische Carbonate, Ether, Nitrile und Mischungen daraus in Frage. Bevorzugte Beispiele sind:
   - Carbonate: Propylencarbonat (PC), Ethylencarbonat-Propylencarbonat (EC-PC), Propy-Iencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
   - Ether: Tetrahydrofuran (THE), 2-Methyltetrahydrofuran, Dimethylether (OME), 1,4-dioxane (DX), 1,3-dioxolane (DOL), Diethylenglykoldimethylether (DEGDME), Tetraethyl-englykoldimethylether (TEGDME)
   - Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

Bevorzugte Leitsalze sind:
NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl3), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

Bei dem negativen Elektrodenmaterial eines Energiespeicherelements auf Basis von Natrium-lonen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Preussisch Blau: Na-arme Variante (für Systeme mit wässrigem Elektrolyt)
- Übergangsmetalloxide: V₂O₅, MnO₂, TiO₂, Nb₂O₅, Fe₂O₃, Na₂Ti₃O₇, NaCrTiO₄, Na₄Ti₅O₁₂
- MXene mit M= Ti, V, Cr, Mo oder Nb und A = Al, Si, und Ga sowie X= C und/oder N, z.B. Ti₃C₂
- Organisch: z.B. Na-Terephthalate (Na₂C₈H₂O₄)

Alternativ kann anodenseitig grundsätzlich auch eine Na-Metallanode zum Einsatz kommen.

Bei dem positiven Elektrodenmaterial eines Energiespeicherelements auf Basis von Natrium-Ionen handelt es sich beispielsweise um mindestens eines der folgenden Materialien:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, NaCoPO₄, Na₂C₀PO₄F
- Silikate: Na₂MnSiO₄, Na₂FeSiO₄
- Schichtoxide: NaCoOz, NaFeOz, NaNiOz, NaCrOz, NaVOz, NaTiOz, Na(FeCo)O₂, Na(Ni-FeCo)₃O₂, Na(NiFeMn)O₂, and Na(NiFeCoMn)O₂, Na(NiMnCo)O₂

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na)-Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt bestehen bei einem Energiespeicherelement auf Basis von Natrium-Ionen-Technologie sowohl der Anoden- als auch der Kathodenstromkollektor aus Aluminium oder einer Aluminiumlegierung. Auch das Gehäuse und die Kontaktplatten sowie ggf. vorhandene weitere Stromleiter innerhalb des Gehäuses können aus Aluminium oder aus der Aluminiumlegierung bestehen.

### Bevorzugte Ausgestaltung des Gehäuses

Besonders bevorzugt zeichnet sich das erfindungsgemäße Energiespeicherelement durch mindestens eines der folgenden Merkmale a. bis c. aus:
a. Der Zentralabschnitt und der Verschlussabschnitt werden durch eine Einbuchtung, welche die Außenseite des Gehäusebechers ringförmig umläuft, getrennt.
b. Der Gehäusebecher weist in dem Zentralabschnitt und dem Verschlussabschnitt einen identischen maximalen Außendurchmesser auf.
c. Im Bereich der Einbuchtung ist der Außendurchmesser des Gehäusebechers um das 4- bis 20-fache der Wandstärke des Gehäusebechers in diesem Bereich reduziert.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Bevorzugt liegt die ringförmige Dichtung in dem Verschlussabschnitt komprimiert vor. Sie wird bevorzugt radial gegen den kreisförmigen Rand des Deckels gepresst.

### Geeignete Kontaktblechteile und Distanzausgleichsblechteile

Für die Erfindung geeignete Kontaktblechteile zeichnen sich bevorzugt durch die folgenden Merkmale a. bis f. aus:
a. Das Kontaktblechteil umfasst einen Kontaktierungsbereich, insbesondere einen scheibenförmigen Kontaktierungsbereich, in dem die Verbindung mit dem Längsrand des Anodenstromkollektors oder dem Längsrand des Kathodenstromkollektors gebildet wird.
b. Das Kontaktblechteil umfasst einen Distanzausgleichsbereich, der sich aus der Ebene des Kontaktierungsbereichs heraus erhebt.
c. Der Kontaktierungsbereich ist scheibenförmig ausgebildet und erstreckt sich bevorzugt im Wesentlichen in einer Ebene.
d. Der Kontaktierungsbereich umschließt den Distanzausgleichsbereich.
e. Der Distanzausgleichsbereich umfasst einen zentralen Verbindungsbereich mit einer in Richtung der Ebene des Kontaktierungsbereichs weisenden Unterseite und einer von der Ebene des Kontaktierungsbereichs wegweisenden Oberseite.
f. Die Oberseite ist plan ausgebildet.

Besonders bevorzugt umschließt der Kontaktierungsbereich den Distanzausgleichsbereich ringförmig. Beispielsweise kann er ringscheibenförmig ausgebildet sein.

Für die Erfindung geeignete Distanzausgleichsblechteile zeichnen sich bevorzugt durch die folgenden Merkmale a. bis f. aus:
a. Das Distanzausgleichsblechteil umfasst einen Kontaktierungsbereich, insbesondere einen ringscheibenförmigen Kontaktierungsbereich, in dem die Verbindung mit dem Längsrand des Anodenstromkollektors oder dem Längsrand des Kathodenstromkollektors gebildet wird.
b. Das Distanzausgleichsblechteil umfasst einen Distanzausgleichsbereich, der sich aus der Ebene des Kontaktierungsbereichs heraus erhebt.
c. Der Kontaktierungsbereich ist scheibenförmig ausgebildet und erstreckt sich bevorzugt im Wesentlichen in einer Ebene.
d. Der Kontaktierungsbereich umschließt den Distanzausgleichsbereich.
e. Der Distanzausgleichsbereich umfasst einen zentralen Verbindungsbereich mit einer in Richtung der Ebene des Kontaktierungsbereichs weisenden Unterseite und einer von der Ebene des Kontaktierungsbereichs wegweisenden Oberseite.
f. Die Oberseite ist plan ausgebildet.

Besonders bevorzugt umschließt der Kontaktierungsbereich den Distanzausgleichsbereich ringförmig. Insbesondere kann er ringscheibenförmig ausgebildet sein.

### Erfindungsgemäße Deckelbaugruppe

Eine erfindungsgemäße Deckelbaugruppe zeichnet sich durch die folgenden Merkmale a. bis e. aus:
a. Die Deckelbaugruppe umfasst eine Metallscheibe und eine Polkappe, die in elektrischem sowie in unmittelbarem mechanischem Kontakt miteinander stehen.
b. Die Polkappe sitzt unmittelbar auf der Metallscheibe auf.
c. Die Polkappe und die Metallscheibe schließen einen Zwischenraum ein.
d. Die Polkappe umfasst mindestens eine Durchbrechung, durch welche der Verbindungsbereich für einen Laser von außerhalb des Gehäuses zugänglich ist, insbesondere für einen Laser von außerhalb des Gehäuses zugänglich ist.
e. Die Deckelbaugruppe umfasst eine Dichtung, die auf ihren Rand aufgezogen ist.

### Bevorzugte Ausführungsformen des Kontaktblechteils und des Distanzausgleichsblechteils

Grundsätzlich kann das Kontaktblechteil mit dem Anodenstromkollektor oder dem Kathodenstromkollektor elektrisch verbunden sein.

In einer besonders bevorzugten Ausführungsform der Erfindung zeichnet sich ein mit dem Anodenstromkollektor elektrisch verbundenes Kontaktblechteil durch mindestens eines der folgenden Merkmale a. und b. aus:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil besteht aus dem gleichen Material wie der Anodenstromkollektor.

In einer weiteren besonders bevorzugten Ausführungsform der Erfindung zeichnet sich ein mit dem Kathodenstromkollektor elektrisch verbundenes Kontaktblechteil durch mindestens eines der folgenden Merkmale a. und b. aus:
a. Das Kontaktblechteil besteht aus Aluminium oder einer Aluminiumlegierung.
b. Das Kontaktblechteil besteht aus dem gleichen Material wie der Anodenstromkollektor.

Das Distanzausgleichsblechteil besteht bevorzugt aus dem gleichen Material wie das Kontaktblechteil, auf das es aufgeschweißt ist.

Besonders bevorzugt zeichnen sich das mit dem Anodenstromkollektor verbundene Kontaktblechteil und/oder das mit dem Kathodenstromkollektor elektrisch verbundene Kontaktblechteil durch mindestens eines der unmittelbar folgenden Merkmale a. und b. aus:
a. Das Kontaktblechteil weist eine bevorzugt gleichmäßige Dicke im Bereich von 50 µm bis 600 µm, bevorzugt im Bereich von 150 µm bis 350 µm, auf.
b. Das Kontaktblechteil ist derart dimensioniert, dass es mindestens 40 %, bevorzugt mindestens 70 %, besonders bevorzugt mindestens 80 % der ersten endständigen oder der zweiten endständigen Stirnseite abdeckt.

Es ist besonders bevorzugt, dass die unmittelbar vorstehenden Merkmale a. und b. in Kombination miteinander realisiert sind.

Das Distanzausgleichsblechteil ist besteht bevorzugt aus einem Blech mit einer Dicke im Bereich von 50 µm bis 1 mm.

Die möglichst großflächige Abdeckung der Stirnseite ist für das thermische Management des erfindungsgemäßen Energiespeicherelements von Bedeutung. Je größer die Abdeckung ist, desto eher ist es möglich, möglichst lange Abschnitte des ersten Längsrands des jeweiligen Stromkollektors zu kontaktieren. In Elektroden-Separator-Verbund gebildete Wärme kann so gut über das Kontaktblechteil abgeführt werden.

Es hat sich in einigen Ausführungsformen als vorteilhaft erwiesen, den Längsrand des Stromkollektors einer Vorbehandlung zu unterziehen, bevor das Kontaktblechteil aufgesetzt wird.

Der Längsrand des Stromkollektors kann auch durch eine Vorbehandlung einer gerichteten Umformung unterzogen worden sein. Beispielsweise kann er in eine definierte Richtung umgebogen sein. Weiterhin kann der Längsrand des Stromkollektors auch ungerichtet deformiert sein, beispielsweise in Folge eines Druckkontakts mit dem Kontaktblechteil.

### Bevorzugte Ausgestaltung von Stromkollektoren und Separatoren

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden und der oder die bandförmigen Separatoren in der Regel einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der Separator oder die Separatoren auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

### Mögliche Ausgestaltungen der Dichtung

Es ist bevorzugt, dass sich das erfindungsgemäße Energiespeicherelement durch mindestens eines der unmittelbar folgenden Merkmale a. und b. auszeichnet:
a. Die Dichtung besteht aus einem Kunststoffmaterial, das einen Schmelzpunkt > 200 °C, bevorzugt > 300 °C, besonders bevorzugt einen Schmelzpunkt > 300 °C und < 350 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE) oder ein Polybutylenterephthalat (PBT).

Es ist bevorzugt, dass die unmittelbar vorstehenden Merkmale a. und b. in Kombination realisiert sind.

### Erfindungsgemäßes Verfahren.

Das erfindungsgemäße Verfahren kann zur Herstellung eines Energiespeicherelements, wie es oben beschrieben wurde, dienen, und zeichnet sich durch die folgenden Schritte aus:
a. Bereitstellung eines metallischen Gehäusebechers mit einer endständigen kreisförmigen Öffnung.
b. Bereitstellen eines Elektroden-Separator-Verbunds mit der Sequenz Anode / Separator / Kathode, der eine erste endständige Stirnseite und eine zweite endständige Stirnseite aufweist.
c. Aufbringen eines Kontaktblechteils auf eine der Stirnseiten.
d. Gegebenenfalls Aufschweißen eines Distanzausgleichsblechteils auf das Kontaktblech oder Fixieren eines Distanzausgleichsblechteils auf dem Kontaktblechteil mittels Bildung einer stoffschlüssigen oder formschlüssigen Verbindung, insbesondere einer Klebeverbindung oder einer Lötverbindung oder einer Nietverbindung.
e. Einbringen des Elektroden-Separator-Verbunds in den Gehäusebecher.
f. Schließen der kreisförmigen Öffnung des Gehäusebechers mittels eines Deckels.
g. Herstellen einer Verbindung, insbesondere einer Schweißverbindung, zwischen dem Deckel und dem Kontaktblechteil oder zwischen dem Deckel und dem Distanzausgleichsblechteil.

Die im Rahmen des Verfahrens eingesetzten Komponenten wurden sämtlich bereits beschrieben. Auf die entsprechenden Ausführungen wird hiermit verwiesen.

Schritt c. erfolgt bevorzugt vor Schritt e.. Es ist grundsätzlich aber möglich, auch noch nach dem Einbringen des Elektroden-Separator-Verbunds in den Gehäusebecher auf eine seiner Stirnseite (die zu Öffnung hin weisende) das Kontaktblechteil aufzubringen. In beiden Fällen ist es bevorzugt, nach dem Aufbringen die Verbindung zwischen den Längsrändern des aus dieser Stirnseite austretenden Stromkollektors und dem Kontaktblechteil zu bilden. Beispielsweise kann zur Bildung einer stoffschlüssigen Verbindung eine Verschweißung mittels eines Lasers erfolgen.

In vielen Fällen sitzt eine der Stirnseiten des Elektroden-Separator-Verbunds nach dem Einschieben des Elektroden-Separators unmittelbar auf dem Boden des Gehäusebechers auf. Es ist dann in der Regel erforderlich, den aus dieser Stirnseite austretenden Stromkollektorrand mit dem Gehäuseboden zu kontaktieren. Dies kann beispielsweise durch Verschweißung mittels eines Lasers durch den Gehäuseboden hindurch erfolgen. In anderen möglichen Ausführungsformen wird auf diese Stirnseite vor Schritt e. ein passendes Kontaktblechteil aufgebracht, so dass nach dem Einbringen nur noch dieses Kontaktblechteil mit dem Gehäusebecher bzw. dessen Boden kontaktiert werden muss, beispielsweise über eine Schweißverbindung. Die Herstellung der Schweißverbindung zwischen dem Kontaktblechteil und dem Boden kann beispielsweise durch Widerstandsschweißen erfolgen. Eine Schweißelektrode kann hierzu durch einen axialen Hohlraum im Wickel geführt werden, eine zweite Schweißelektrode kann von außen an den Boden gedrückt werden.

Schritt d. ist in Fällen erforderlich, in denen das Kontaktblechteil selbst keinen Distanzausgleichsbereich umfasst. Schritt d. kann ebenfalls vor oder nach Schritt e., also dem Einbringen des Elektroden-Separator-Verbunds in den Gehäusebecher, erfolgen.

Zum Schließen der kreisförmigen Öffnung des Gehäusebechers mittels des Deckels kann auf herkömmliche Verschlussverfahren zurückgegriffen werden. Besonders bevorzugt ist der Verschluss durch Bördelung. Im Rahmen dieses Prozesses wird der Rand des Gehäusebechers radial nach innen umgebogen, gleichzeitig wird die Dichtung auf die oben beschriebene Art komprimiert.

Vor oder nach dem Gehäuseverschluss kann der Elektroden-Separator-Verbund mit einem geeigneten Elektrolyten getränkt werden. In der zweiten Variante muss der Elektrolyt über ein geeignetes Loch im Gehäuse eindosiert werden, welches anschließend verschlossen wird.

Das Herstellen der Verbindung, bevorzugt der stoffschlüssigen Verbindung, insbesondere der Schweißverbindung, zwischen dem Deckel und dem Kontaktblechteil oder zwischen dem Deckel und dem Distanzausgleichsblechteil nach dem Verschluss des Gehäuses ist einer der Kernaspekte der vorliegenden Erfindung. Dieser Schritt ermöglicht den Verzicht auf das eingangs erwähnte lange Tab.

Die Schweißverbindung zwischen dem Deckel und dem Kontaktblechteil oder zwischen dem Deckel und dem Distanzausgleichsblechteil kann insbesondere mittels Laserverschweißung erfolgen. Hierzu kann ein Laserstrahl durch die oben beschriebene mindestens eine Durchbrechung in der Polkappe hindurch auf den ebenfalls bereits beschriebenen Verbindungsbereich der Metallscheibe des Deckels gerichtet werden, an deren Innenseite der zentrale Verbindungsbereich des Distanzausgleichsbereichs des Distanzausgleichsblechteils oder des Kontaktblechteils anliegt.

In einigen Ausführungsformen ist besonders bevorzugt, durch die mindestens eine Durchbrechung zwei oder mehr Schweißelektroden zu führen, die beabstandet voneinander auf den Verbindungsbereich der Metallscheibe des Deckels aufgedrückt werden. Bei Anlegen einer elektrischen Spannung zwischen den Schweißelektroden kann der zwischen den Elektroden fließende Strom durch die Metallscheibe fließen und auf ihrer Innenseite eine Verschweißung mit dem Distanzausgleichsblechteil oder dem Kontaktblechteil bewirken.

Kommt an Stelle einer Verschweißung die oben beschriebene Verklebung oder die erwähnte Verlötung zum Einsatz, entfällt Schritt g. des erfindungsgemäßen Verfahrens. Ersatzweise ist in diesen Fällen bevorzugt, dass ein elektrisch leitender Klebstoff oder ein Lotmittel auf den Verbindungsbereich des Kontaktblechteils oder des Distanzausgleichsblechteils aufgetragen wird. In einem Folgeschritt wird dann der Deckel bzw. der Verbindungsbereich der Metallscheibe des Deckels auf den Verbindungsbereich des Kontaktblechteils oder des Distanzausgleichsblechteils bzw. den darauf aufgebrachten Klebstoff oder das verflüssigte Lotmittel gepresst. Auch so kann eine zuverlässige elektrische Verbindung hergestellt werden.

Dem Zellverschluss schließt sich vorzugsweise noch ein Kalibrierverfahren an, bei dem die Höhe des Energiespeicherelements kalibriert wird. Sowohl während des Verschlusses als auch während des Kalibrierens können erhebliche axiale Kräfte auf das Gehäuse und die darin angeordneten Komponenten wirken. Diese können durch den oben beschriebenen Stützring und das Distanzausgleichsblechteil bzw. das Kontaktblechteil ausgeglichen werden.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 einen Ausschnitt einer Querschnittsansicht einer ersten Ausführungsform eines erfindungsgemäßen Energiespeicherelements mit einer erfindungsgemäße Deckelbaugruppe und einem erfindungsgemäßen Distanzausgleichsblechteil;
- Fig. 2 einen Ausschnitt einer Querschnittsansicht einer ersten Ausführungsform eines erfindungsgemäßen Energiespeicherelements;
- Fig. 3 einen Ausschnitt einer Querschnittsansicht einer ersten Ausführungsform eines erfindungsgemäßen Energiespeicherelements;
- Fig. 4 eine teilgeschnittene Darstellung der ersten Ausführungsform des erfindungsgemä-ßen Energiespeicherelements;
- Fig. 5 eine Darstellung einer bevorzugten Ausführungsform einer erfindungsgemäßen Deckelbaugruppe;
- Fig. 6 eine Darstellung einer bevorzugten Ausführungsform eines für ein erfindungsgemä-ßes Energiespeicherelement geeigneten Distanzausgleichsblechteils;
- Fig. 7 eine Darstellung einer bevorzugten Ausführungsform eines für ein erfindungsgemä-ßes Energiespeicherelement geeignetes Kontaktblechteils;
- Fig. 8 einen Elektroden-Separator-Verbund, der Bestandteil eines erfindungsgemäßen Energiespeicherelements sein kann, sowie dessen Komponenten;
- Fig. 9 eine Ansicht (Querschnittsdarstellung) des Bodenbereichs eines erfindungsgemäßen Energiespeicherelements.

### DETAILLIERTE BESCHREIBUNG DER AUSFÜHRUNGSBEISPIELE

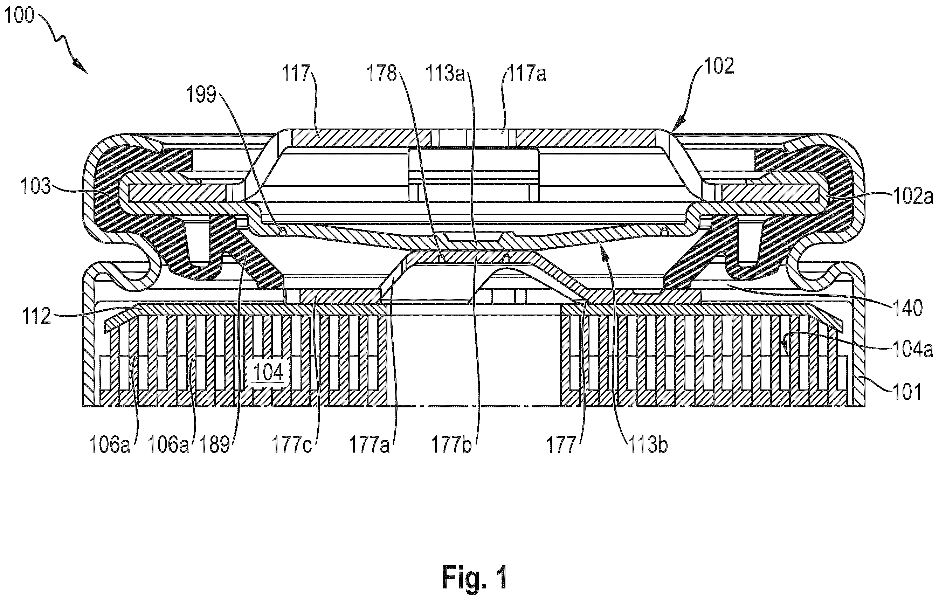

Das in **Fig. 1** dargestellte Energiespeicherelement 100 umfasst den Elektroden-Separator-Verbund 104, der in Form eines zylindrischen Wickels mit zwei endständigen Stirnseiten und einem dazwischen liegenden Wickelmantel vorliegt. Aus der endständigen Stirnseite 104a tritt der erste Längsrand 106a des Anodenstromkollektors 106 aus. Dieser ist nicht mit Elektrodenmaterial beladen und durch Verschweißung mit dem Kontaktblechteil 112 verbunden, das auf dem Längsrand 106a aufsitzt und die erste endständige Stirnseite 104a abdeckt.

Weiterhin umfasst das Energiespeicherelement 100 ein luft- und flüssigkeitsdicht verschlossenes Gehäuse, das den metallischen Gehäusebecher 101 mit einer endständigen kreisförmigen Öffnung und die Deckelbaugruppe 102 mit einem kreisförmigen Rand 102a, welcher die kreisförmige Öffnung verschließt, umfasst. Die Deckelbaugruppe 102 ist gemäß der Erfindung ausgebildet. Sie umfasst die Metallscheibe 113, deren Unterseite 113b den Innenraum 140 des Gehäuses begrenzt, sowie die Polkappe 117, die unmittelbar auf der Metallscheibe 113 aufsitzt und mit dieser in elektrischem Kontakt steht sowie mit dieser einen Zwischenraum einschließt.

Auf das Kontaktblechteil 112 ist das Distanzausgleichsblechteil 177 aufgeschweißt, das einen Distanzausgleichsbereich 177a umfasst, der in einem Verbindungsbereich 177b durch Verschwei-ßung mit der Innenseite 113b der Metallscheibe 113 verbunden ist, die unmittelbar auf dem Verbindungsbereich 177b aufliegt. Das Distanzausgleichsblechteil 177 ist gemäß der Erfindung ausgebildet. Der Verbindungsbereich 177b ist begrenzt durch die ringförmige Nut 178. Weiterhin umfasst das Distanzausgleichsblechteil 177 den ringscheibenförmigen Kontaktierungsbereich 177c. Dieser ist durch Verschweißung mit dem Kontaktblechteil 112 verbunden und umschließt den Distanzausgleichsbereich 177a, der sich aus der Ebene des Kontaktierungsbereichs 177c heraus bis hin zu der Metallscheibe 113 erstreckt. Die Metallscheibe 113 umfasst in ihrem Zentrum den Verbindungsbereich 113a, in dem die Verschweißung mit dem Verbindungsbereich 177b realisiert ist. Sie ist als PRV (pressure relief valve) ausgebildet und umfasst zu diesem Zweck die kreisförmige, langgestreckte Schwächungsnut 199.

Die Polkappe 117 umfasst mehrere Durchbrechungen, darunter auch das Loch 117a, durch welches der Verbindungsbereich 113a für einen Laser von außerhalb des Gehäuses zugänglich ist.

Das Gehäuse umfasst weiterhin die Kunststoffdichtung 103, welche den Rand 102a der Deckelbaugruppe 102 umschließt und die metallischen Komponenten der Deckelbaugruppe 102 von dem Gehäusebecher 101 elektrisch isoliert. Gleichzeitig trägt sie dazu bei, das Gehäuse abzudichten.

Das Energiespeicherelement 100 umfasst weiterhin einen Stützring 189, der zwischen der Metallscheibe 113 und dem Distanzausgleichsblechteil 177 eingeklemmt ist. Der Stützring 189 liegt auf dem Kontaktierungsbereich 177c des Distanzausgleichsblechteils 177 auf und drückt von unten gegen die Metallscheibe 113. Vorliegend ist der Stützring 189 ein Teil der Dichtung 103.

Die dargestellte Ausführungsform der erfindungsgemäßen Energiespeicherzelle 100 hat diverse Vorteile:
- Die erfindungsgemäße Deckelbaugruppe 102 besteht nur aus drei Teilen, nämlich (von außen nach innen) der Polkappe 117, der Metallscheibe 113 und der Dichtung 103. Klassische Deckelbaugruppen mit vergleichbarer Funktion umfassen in der Regel mindestens vier Teile. Demgegenüber ist die Konstruktion der Deckelbaugruppe 102 vereinfacht.
- Das Distanzausgleichsblechteils 177 ersetzt die eingangs erwähnten "Tabs".
- Die hieraus resultierende vereinfachte Struktur ermöglicht es, erst nach dem Verschließen des Gehäuses eine Schweißverbindung zwischen dem Distanzausgleichsblechteil 177 und der Metallscheibe 113 herzustellen. Alles, was dazu erforderlich ist, ist das Loch 117a in der Polkappe 117, wie in der Zeichnung gezeigt. Mit einem Laser kann die Schweißung, von außen durchgeführt werden.
- Die Energiespeicherzelle 100 zeichnet sich durch zwei Sicherheitsfunktionen aus, ein PRV (Druckbegrenzungsventil) und das erwähnte CID. Das PRV wird durch die Nut 199 realisiert. Wenn der Druck im Inneren des Gehäuses einen vordefinierten Grenzwert überschreitet, reißt die Metallscheibe 113 entlang der Nut 199 auf.
- Die kreisförmige Nut im Distanzausgleichsbereich 177a gewährleistet die CID-Funktion. Wenn der Druck im Inneren des Gehäuses ansteigt, wölbt sich die Metallscheibe 113 nach außen. Aufgrund der Schweißverbindung zwischen der Metallscheibe 113 und dem Distanzausgleichsbereich 177a übt die sich wölbende Membran eine Zugkraft auf den Distanzausgleichsbereich 177a aus. Wenn diese Kraft stark genug ist, wird der Verbindungsbereich 177b entlang der Nut 178 aus dem Distanzausgleichsbereich 177a herausgerissen. Dadurch werden der direkte Kontakt und die elektrische Verbindung zwischen der Metallscheibe 113 und dem Distanzausgleichsbereich 177a unterbrochen, und es verbleibt ein Loch im oberen Teil des Distanzausgleichsbereich 177a.
- Ein weiterer wichtiger Aspekt: Es kann die Gefahr bestehen, dass durch die besagte Zugkraft das ganze Distanzausgleichsblechteil 177 zusammen mit der Metallscheibe 113 angehoben wird, so dass das CID nicht funktioniert. Um eine solche Situation zu vermeiden, kann die Dichtung den Stützring 189 umfassen. Falls sich die Metallscheibe 113 nach außen wölbt, hält der Stützring das Distanzausgleichsblechteil 177 an seinem Platz und gewährleistet die Funktion des CID.

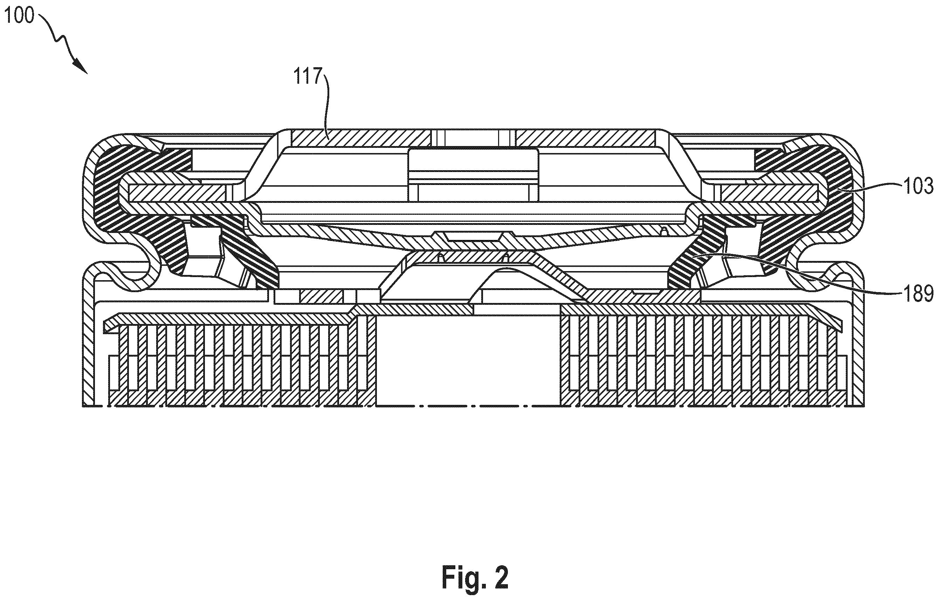

Das in **Fig. 2** dargestellte Energiespeicherelement 100 unterscheidet sich von dem in Fig. 1 dargestellten lediglich dadurch, dass der Stützring 189 nicht als Teil der Dichtung 102 ausgebildet ist.

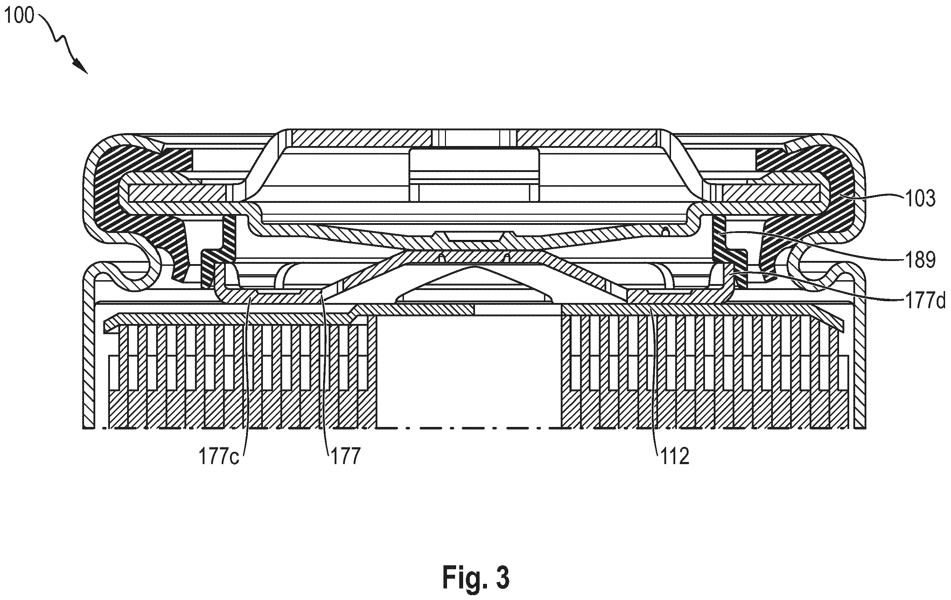

Das in **Fig. 3** dargestellte Energiespeicherelement 100 unterscheidet sich von dem in Fig. 1 dargestellten dadurch, dass der Stützring 189 nicht als Teil der Dichtung 102 ausgebildet ist. Ein weiterer Unterschied besteht darin, dass der Rand 177d des Kontaktierungsbereich 177c um 90 ° nach oben gebogen ist.

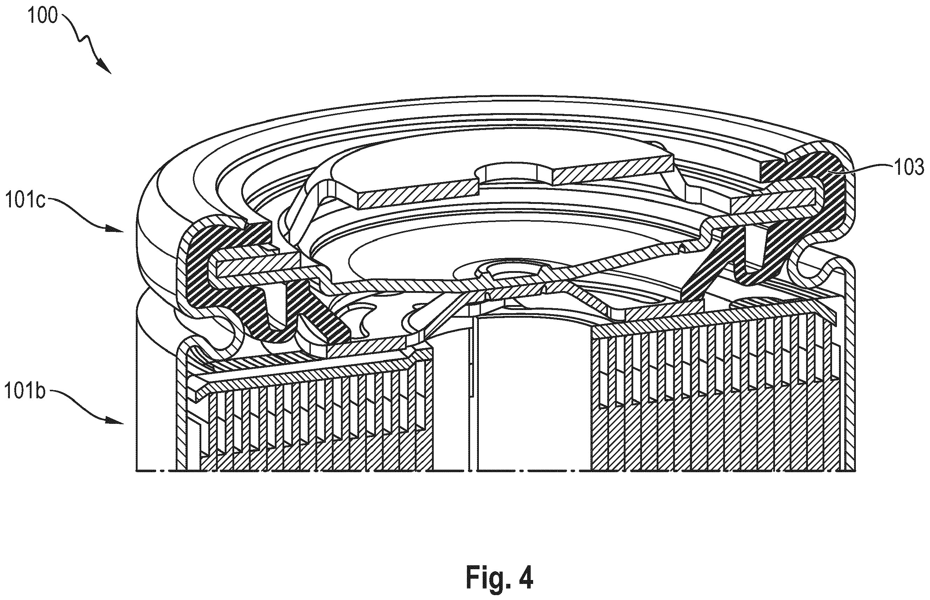

Bei **Fig. 4** handelt es sich um eine teilgeschnittene Darstellung der in Fig. 1 dargestellten Ausführungsform des erfindungsgemäßen Energiespeicherelements.

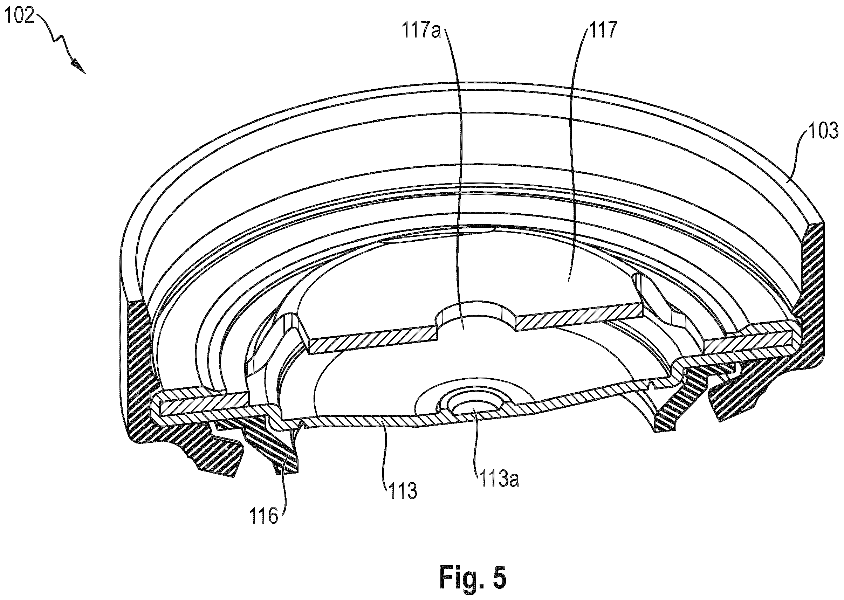

Die in **Fig. 5** dargestellte Deckelbaugruppe 102 umfasst die Polkappe 117, die Metallscheibe 113, die ringförmige Dichtung 103 und den Stützring 116. Die Metallscheibe 113 steht unmittelbar mit der Polkappe 117 in Kontakt. Die ringförmige Dichtung 103 ist auf den kreisförmigen Rand der Deckelbaugruppe 102 aufgezogen. Der Rand der Deckelbaugruppe wird wiederum gebildet von dem Rand der Metallscheibe 113, der U-förmig um den Rand der Polkappe 117 umgeschlagen ist.

Die Polkappe 117 weist als Durchbrechung ein zentrales Loch 117a auf. Unter diesem Loch findet sich das Zentrum der Metallscheibe 113. Im Zentrum der Metallscheibe 113 findet sich der Verbindungsbereich 113a, der sich durch eine im Verhältnis zu umgebenden Bereichen geringere Materialstärke auszeichnet.

Die Deckelbaugruppe ist in unmontiertem Zustand dargestellt.

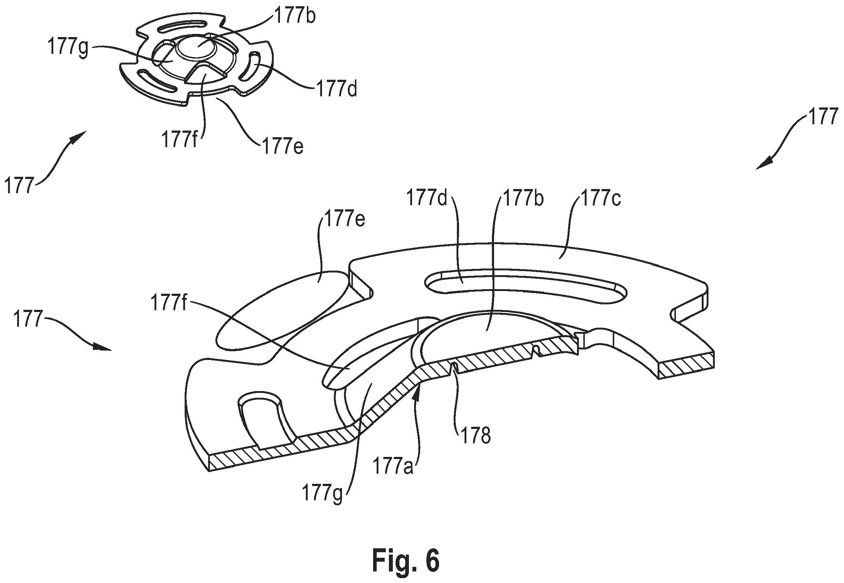

**Fig. 6** zeigt ein Distanzausgleichsblechteil 177, das im Rahmen der vorliegenden Erfindung zum Einsatz kommen kann. Dieses umfasst den ringscheibenförmigen Kontaktierungsbereich 177c, der durch Verschweißung mit dem Kontaktblechteil 112 verbunden werden kann. Der Kontaktierungsbereich 177c umschließt den Distanzausgleichsbereich 177a, der sich aus der Ebene des Kontaktierungsbereichs 177c heraus erhebt. Der Distanzausgleichsbereich 177a umfasst wiederum den durch die kreisförmige Nut 178 definierten kreisförmigen Verbindungsbereich 177b, der eine plane Oberfläche aufweist, sowie drei Stege 177g, die den Kontaktierungsbereich 177c mit dem Verbindungsbereich 177b verbinden. Zwischen den Stegen sind drei Öffnungen 177f angeordnet, die für den Durchlass von Elektrolyt sowie für den Druckausgleich vorgesehen sind. Dem gleichen Zweck diesen auch die Ausnehmungen 177e.

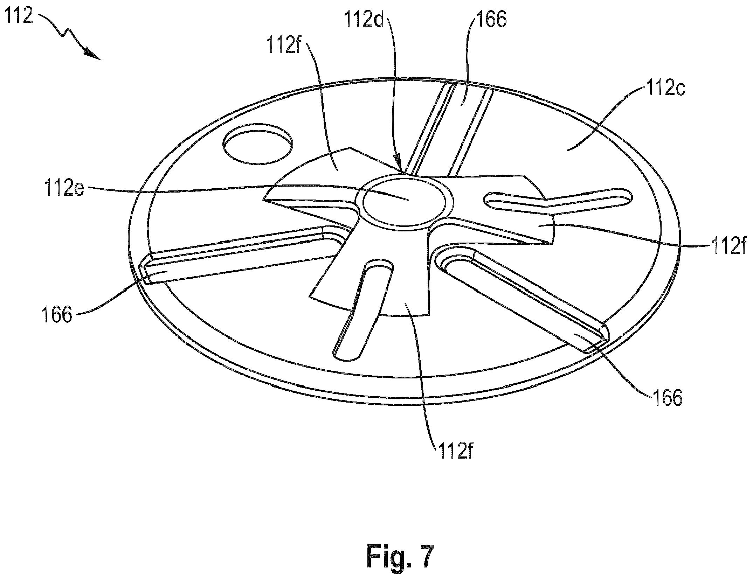

**Fig. 7** zeigt ein Kontaktblechteil 112, das im Rahmen der vorliegenden Erfindung zum Einsatz kommen kann. Dieses umfasst den scheibenförmigen Kontaktierungsbereich 112c, der zur Verschweißung mit dem Längsrand 106a des Anodenstromkollektors 106 oder dem Längsrand 109a des Kathodenstromkollektors 109 vorgesehen ist. Bevorzugt erstreckt sich der Kontaktierungsbereich 112c im Wesentlichen in einer Ebene. Der Kontaktierungsbereich 112c umschließt den Distanzausgleichsbereich 112d, der sich aus der Ebene des Kontaktierungsbereichs 112c heraus erhebt. Der Distanzausgleichsbereich 112d umfasst wiederum den kreisförmigen Verbindungsbereich 112e, der eine plane Oberfläche aufweist, sowie drei Stege 112f, die den Kontaktierungsbereich 177c mit dem Verbindungsbereich 112e verbinden.

Im Kontaktierungsbereich 112c finden sich drei Sicken 166 in sternförmiger Anordnung. Im Bereich dieser Sicken 166 kann die Verschweißung mit einem der Längsränder erfolgen.

Ein Distanzausgleich ist in Energiespeicherelementen, wie sie in den Figuren 1 bis 4 dargestellt sind, häufig erforderlich, weil sich einzelne Bauteile wie z.B. der Elektroden-Separator-Verbund 104 nicht immer mit exakt gleichen Dimensionen, beispielsweise mit exakt der gleichen Höhe, fertigen lassen. Stattdessen treten prozessbedingt Unterschiede auf, die ausgeglichen werden müssen. Das dargestellte Kontaktblechteil 112 ermöglicht innerhalb einer Zelle in axialer Richtung einen Toleranzausgleich bei gleichzeitiger Kontaktierung des Elektroden-Separator-Verbunds bzw. des Überstands des Längsrands, der stirnseitig aus dem Verbund austritt. In der dargestellten Ausprägung kann der Distanzausgleichsbereich 112d als Feder wirken, die nach unten gegen den Elektroden-Separator-Verbund und nach oben gegen den Deckel drückt. Beim erwähnten Kalibrieren kann insbesondere diese Federwirkung ausgleichend wirken.

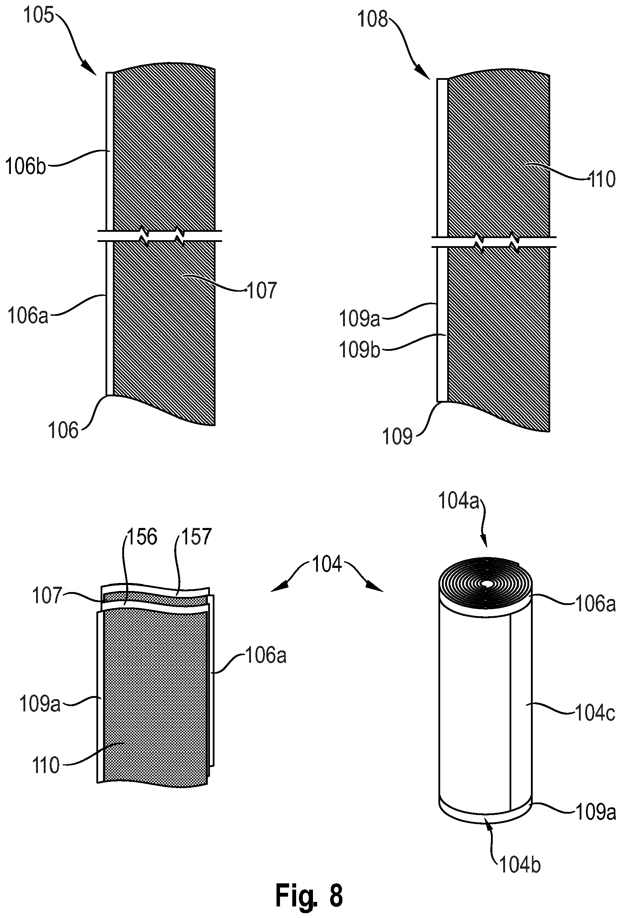

**Fig. 8** veranschaulicht den Aufbau eines Elektroden-Separator-Verbunds 104, der Bestandteil eines erfindungsgemäßen Energiespeicherelements sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

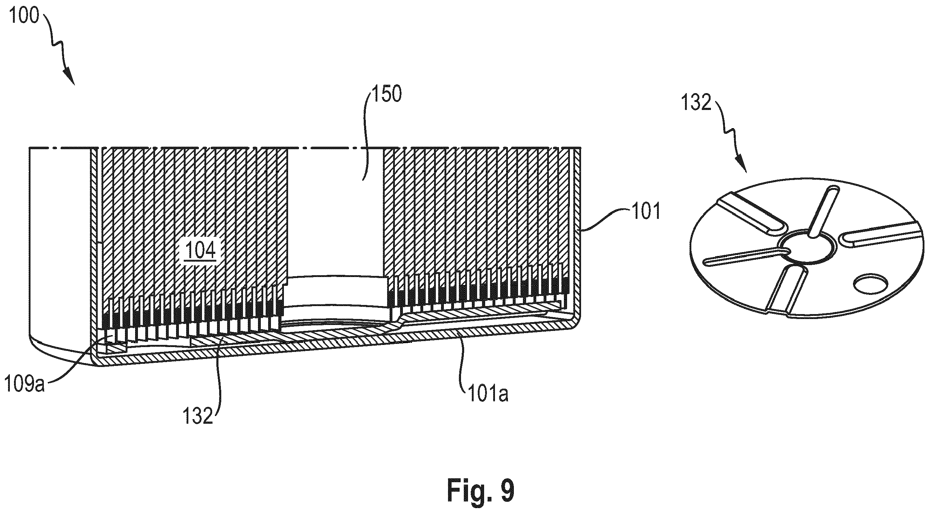

In **Fig. 9** ist der Bodenbereich einer bevorzugten Ausführungsform eines erfindungsgemäßen Energiespeicherelements 100 dargestellt. In dem Gehäusebecher 101 ist der Elektroden-Separator-Verbund 104 angeordnet. Auf dem Boden 101a des Gehäusebechers sitzt das Kontaktblechteil 132 auf. Dessen Unterseite ist vorzugsweise durch Verschweißung mit dem Boden 101a verbunden. Die Verschweißung kann durch den Boden 101a hindurch mittels eines Lasers bewirkt werden. Alternativ kann beispielsweise auch mindestens eine Schweißelektrode durch den axialen Hohlraum 150 im Zentrum des Elektroden-Separator-Verbund 104 geführt werden. Eine Gegenelektrode kann auch an die Außenseite des Bodens 101a angepresst werden. Die Oberseite des Kontaktblechteils 132 steht in unmittelbarem Kontakt mit dem Längsrand 109a eines Anodenstromkollektors. Bevorzugt sind der Längsrand 109a und das Kontaktblechteil 132 ebenfalls durch Verschweißung verbunden.

Das Kontaktblechteil 132 ist separat dargestellt. Es weist wie das Kontaktblechteil 112 Sicken auf, um die Kontaktierung zu dem Längsrand 109a zu verbessern. Die schlitzförmigen Durchbrechungen dienen zur Entgasung sowie zur besseren Verteilung von Elektrolyt.

## Patentansprüche

1. Energiespeicherelement (100) mit den folgenden Merkmalen:
a. Das Energiespeicherelement umfasst einen Elektroden-Separator-Verbund (104) mit der Sequenz Anode (105) / Separator (156) / Kathode (108),
b. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor,
c. die Anode (105) des Elektroden-Separator-Verbunds (104) umfasst einen Anodenstromkollektor (106), der einen ersten Längsrand (106a) und einen dazu parallelen zweiten Längsrand aufweist und einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist,
d. die Kathode (108) des Elektroden-Separator-Verbunds (104) umfasst einen Kathodenstromkollektor (109), der einen ersten Längsrand (109a) und einen dazu parallelen zweiten Längsrand aufweist und einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist,
e. die Anode (105) und die Kathode (108) sind innerhalb des Elektroden-Separator-Verbunds (104) derart angeordnet, dass der erste Längsrand (106a) des Anodenstromkollektors (106) aus der ersten endständigen Stirnseite (104a) und der erste Längsrand (109a) des Kathodenstromkollektors (108) aus der zweiten endständigen Stirnseite (104b) des Elektroden-Separator-Verbunds (104) austritt,
f. das Energiespeicherelement umfasst ein Kontaktblechteil (112), das auf dem ersten Längsrand (106a) des Anodenstromkollektors (106) aufsitzt und die erste endständige Stirnseite (104a) abdeckt oder auf dem ersten Längsrand (109a) des Kathodenstromkollektors (109) aufsitzt und die zweite endständige Stirnseite (104b) abdeckt und mit diesem verbunden ist,
g. das Energiespeicherelement umfasst ein luft- und flüssigkeitsdicht verschlossenes Gehäuse, das einen metallischen Gehäusebecher (101) mit einer endständigen kreisförmigen Öffnung und einen Deckel (102) mit einem kreisförmigen Rand (102a), welcher die kreisförmige Öffnung verschließt, umfasst, und das einen Innenraum umschließt, in dem der Elektroden-Separator-Verbund (104) angeordnet ist,
h. der Deckel (102) umfasst eine Metallscheibe (113) mit einem kreisförmigen Rand, wobei die Metallscheibe (113) eine Innenseite aufweist, die den Innenraum begrenzt,
**dadurch gekennzeichnet, dass**
i. entweder das Kontaktblechteil (112) einen Distanzausgleichsbereich (112d) umfasst, der in einem Verbindungsbereich (112e) mit der Innenseite der Metallscheibe (113) verbunden ist, oder ein Distanzausgleichsblechteil (177) auf das Kontaktblechteil (112) aufgeschweißt ist, wobei das Distanzausgleichsblechteil (177) einen Distanzausgleichsbereich (177a) umfasst, der in einem Verbindungsbereich (177b) mit der Innenseite der Metallscheibe (113) verbunden ist.

2. Energiespeicherelement (100) nach Anspruch 1 mit mindestens einem der folgenden zusätzlichen Merkmale:
a. Der Deckel (102) ist eine Deckelbaugruppe, die neben der Metallscheibe (113) eine Polkappe (117) umfasst, die mit der Metallscheibe (113) in elektrischem Kontakt steht.
b. Die Polkappe (117) sitzt unmittelbar auf der Metallscheibe (113) auf.
c. Die Polkappe (117) und die Metallscheibe (113) schließen einen Zwischenraum ein.
d. Die Metallscheibe (113) umfasst einen Verbindungsbereich (113a), in dem die Verbindung mit dem Verbindungsbereich (112e) oder dem Verbindungsbereich (177b) realisiert ist.
e. Die Polkappe (117) umfasst mindestens eine Durchbrechung (117a), durch welche der Verbindungsbereich (113a) von außerhalb des Gehäuses zugänglich ist, insbesondere für einen Laser von außerhalb des Gehäuses zugänglich ist.

3. Energiespeicherelement (100) nach Anspruch 1 oder Anspruch 2 mit mindestens einem der folgenden zusätzlichen Merkmale:
a. Das Kontaktblechteil (112) umfasst einen Kontaktierungsbereich (112c), insbesondere einen scheibenförmigen Kontaktierungsbereich, an den der Längsrand (106a) des Anodenstromkollektors (106) oder der Längsrand (109a) des Kathodenstromkollektors (109) geschweißt oder über eine alternative stoffschlüssige oder formschlüssige Verbindung angebunden ist.
b. Der Kontaktierungsbereich (112c) umschließt den Distanzausgleichsbereich (112d), der sich aus der Ebene des Kontaktierungsbereichs (112c) heraus bis hin zu der Metallscheibe (113) erstreckt.

4. Energiespeicherelement (100) nach Anspruch 1 oder Anspruch 2 mit mindestens einem der folgenden zusätzlichen Merkmale:
a. Das Distanzausgleichsblechteil (177) umfasst einen Kontaktierungsbereich (177c), insbesondere einen ringscheibenförmigen Kontaktierungsbereich (177c), der durch Verschweißung mit dem Kontaktblechteil (112) verbunden oder über eine alternative stoffschlüssige oder formschlüssige Verbindung mit dem Kontaktblechteil (112) verbunden ist.
b. Der Kontaktierungsbereich (177c) umschließt den Distanzausgleichsbereich (177a), der sich aus der Ebene des Kontaktierungsbereichs (177c) heraus bis hin zu der Metallscheibe (113) erstreckt.

5. Energiespeicherelement (100) nach einem der vorhergehenden Ansprüche mit mindestens einem der folgenden zusätzlichen Merkmale:
a. Die Metallscheibe (113) ist als PRV (pressure relief valve) ausgebildet und umfasst zu diesem Zweck eine langgestreckte Schwächungsnut (199).
b. Im Verbindungsbereich (113a) zeichnet sich die Metallscheibe (113) durch eine geringere Materialstärke aus als in dem den Verbindungsbereich (113a) umgebenden Bereich.

6. Energiespeicherelement (100) nach einem der vorhergehenden Ansprüche mit mindestens einem der folgenden zusätzlichen Merkmale:
a. Das Gehäuse umfasst eine Dichtung (103) aus einem Kunststoffmaterial, welche den Rand (102a) des Deckels (102) umschließt und zwischen dem Deckel (102) und dem Gehäusebecher (101) angeordnet ist.
b. Das Energiespeicherelement umfasst einen Stützring (189) aus einem Kunststoffmaterial, der zwischen der Metallscheibe (113) und der dem Distanzausgleichsblechteil (177) oder zwischen der Metallscheibe (113) und dem Kontaktblechteil (112) angeordnet, insbesondere eingeklemmt, ist.
c. Der Stützring (189) liegt auf dem Kontaktierungsbereich (112c) des Kontaktblechteils (112) oder dem Kontaktierungsbereich (177c) des Distanzausgleichsblechteils (177) auf.
d. Der Stützring (189) ist Teil der Dichtung (103).

7. Energiespeicherelement (100) nach mindestens einem der vorhergehenden Ansprüche mit mindestens einem der folgenden zusätzlichen Merkmale:
a. Der Gehäusebecher (101) umfasst in axialer Abfolge einen Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und
- in dem Verschlussabschnitt (101c) die ringförmige Dichtung (103) in einem Presskontakt mit dem Rand des Deckels (102) und der Innenseite des Gehäusebechers (101) steht, und
b. der Gehäusebecher (101) weist in dem Verschlussabschnitt (101c) einen die kreisförmige Öffnung definierenden Öffnungsrand (101d) auf, der radial nach innen über den von der Dichtung (103) umschlossenen Rand des Deckels (102) umgebogen ist und der den Deckel (102) einschließlich der Dichtung (103) in der kreisförmigen Öffnung des Gehäusebechers (101) formschlüssig fixiert.

8. Deckelbaugruppe (112) mit den folgenden Merkmalen:
a. Die Deckelbaugruppe umfasst eine Metallscheibe (113) und eine Polkappe (117), die in elektrischem sowie in unmittelbarem mechanischem Kontakt miteinander stehen.
b. Die Polkappe (117) sitzt unmittelbar auf der Metallscheibe (113) auf.
c. Die Polkappe (117) und die Metallscheibe (113) schließen einen Zwischenraum ein.
d. Die Polkappe (117) umfasst mindestens eine Durchbrechung (117a), durch welche der Verbindungsbereich (113a) von außerhalb des Gehäuses zugänglich ist, insbesondere für einen Laser von außerhalb des Gehäuses zugänglich ist.
e. Die Deckelbaugruppe umfasst eine Dichtung (103), die auf ihren Rand aufgezogen ist.

9. Verfahren zur Herstellung eines Energiespeicherelements (100) gemäß einem der Ansprüche 1 bis 7 mit den folgenden Schritten:
a. Bereitstellung eines metallischen Gehäusebechers (101) mit einer endständigen kreisförmigen Öffnung.
b. Bereitstellen eines Elektroden-Separator-Verbunds (104) mit der Sequenz Anode (105) / Separator (156)/ Kathode (108), der eine erste endständige Stirnseite (104a) und eine zweite endständige Stirnseite (104b) aufweist.
c. Aufbringen eines Kontaktblechteils (112) auf eine der Stirnseiten.
d. Gegebenenfalls Aufschweißen eines Distanzausgleichsblechteils (177) auf das Kontaktblechteil oder Fixieren eines Distanzausgleichsblechteils (177) auf dem Kontaktblechteil mittels Bildung einer alternativen stoffschlüssigen Verbindung oder einer formschlüssigen Verbindung.
e. Einbringen des Elektroden-Separator-Verbunds (104) in den Gehäusebecher (101).
f. Schließen der kreisförmigen Öffnung des Gehäusebechers (101) mittels eines Deckels (102).
g. Herstellen einer Verbindung, insbesondere einer Schweißverbindung, zwischen dem Deckel (102) und dem Kontaktblechteil (112) oder zwischen dem Deckel (102) und dem Distanzausgleichsblechteil (177).
